# EUROPEAN PATENT APPLICATION

(11) **EP 4 835 775 A1**
(43) Date of publication of application: **04.11.2026**
(21) Application number: 26169740.3
(22) Date of filing: 31.03.2026
(51) Int. Cl.: G06Q 10/20, G06Q 30/06

(54) **PARTS PURCHASE SUPPORT SYSTEM AND PARTS PURCHASE SUPPORT METHOD**

(30) Priority: 30.04.2025 JP 2025075222
(71) Applicant: Kawasaki Motors, Ltd., Akashi-shi, Hyogo 673-8666 (JP)
(72) Inventor: KURITA, Masanori, Akashi-shi, Hyogo 673-8666 (JP); MURATOME, Ryouichi, Akashi-shi, Hyogo 673-8666 (JP)
(74) Representative: Witte, Weller & Partner Patentanwälte mbB

(57) **Abstract**

A parts purchase support system according to one aspect includes: a parts list database that stores vehicle information in association with a parts image and parts information, the vehicle information being information regarding a vehicle; an update information database that stores update parts information in association with update information, the update parts information indicating an update-target part that is a part related to update, the update information being information regarding the update for the update-target part; and processing circuitry configured to acquire parts selection information indicating a selected part selected by the user from parts in the parts list database, when the processing circuitry refers to the update information database and determines that the selected part is not the update-target part, execute a first support process that supports the user in purchasing the selected part, and when the processing circuitry refers to the update information database and determines that the selected part is the update-target part, execute a second support process based on the update information.

## Description

### BACKGROUND OF THE INVENTION

### FIELD OF THE INVENTION

The present disclosure relates to a parts purchase support system and a parts purchase support method both of which support users in purchasing parts of vehicles.

### DESCRIPTION OF THE RELATED ART

Japanese Laid-Open Patent Application Publication No. 2002-99550 discloses a system for ordering parts of vehicles. A server of this system includes a products/parts database that stores products/parts data including image data in a searchable state.

### SUMMARY OF THE INVENTION

In order to keep the searchable state regardless of changes in circumstances, the products/parts data including the image data needs to be continuously maintained. In this case, as the types of products and the number of parts increase, maintenance management of the products/parts data increases.

An object of one aspect of the present disclosure is to provide a parts purchase support system and a parts purchase support method both of which can reduce maintenance management work for products/parts data and support parts purchase work performed by a user.

A parts purchase support system according to one aspect of the present disclosure is a parts purchase support system that supports a user in purchasing a part of a vehicle, the parts purchase support system including: a parts list database that stores vehicle information in association with a parts image and parts information, the vehicle information being information regarding the vehicle, the parts image including an image of the part constituting the vehicle, the parts information being information regarding the part shown in the parts image; an update information database that stores update parts information in association with update information, the update parts information indicating an update-target part that is the part related to update from the parts list database, the update information being information regarding the update for the update-target part; and processing circuitry configured to acquire parts selection information indicating a selected part selected by the user from parts in the parts list database, when the processing circuitry refers to the update information database and determines that the selected part is not the update-target part, execute a first support process that supports the user in purchasing the selected part, and when the processing circuitry refers to the update information database and determines that the selected part is the update-target part, execute a second support process based on the update information in addition to or instead of the first support process.

A parts purchase support method according to one aspect of the present disclosure is a parts purchase support method of supporting a user in purchasing a part of a vehicle, the parts purchase support method including: acquiring parts selection information indicating a selected part selected by the user from parts of the vehicle; referring to an update information database that stores update parts information in association with update information, the update parts information indicating an update-target part that is the part related to update among the parts of the vehicle, the update information being information regarding the update for the update-target part; when it is determined that the selected part is not the update-target part, executing a first support process that supports the user in purchasing the selected part; referring to the update information database; and when it is determined that the selected part is the update-target part, executing a second support process based on the update information in addition to or instead of the first support process.

A parts purchase support system according to another aspect of the present disclosure is a parts purchase support system that supports a user in purchasing a part of a vehicle, the parts purchase support system including: a parts list database that stores vehicle information in association with a parts image and parts information, the vehicle information being information regarding the vehicle, the parts image including an image of the part constituting the vehicle, the parts information being information regarding the part shown in the parts image; and processing circuitry configured to acquire vehicle identification information given to the vehicle to identify the vehicle, refer to the parts list database, and output the parts image corresponding to the vehicle identified by the vehicle identification information.

The present disclosure can provide the parts purchase support system and the parts purchase support method both of which can reduce maintenance management work and support parts purchase work performed by a user.

### BRIEF DESCRIPTION OF THE DRAWINGS

FIG. 1 is a block diagram showing a schematic configuration of a parts purchase support system according to an embodiment.
FIG. 2 is a flowchart showing the flow of a purchasing parts selection process.
FIG. 3 shows one example of a user-dedicated screen image on an EC site.
FIG. 4 shows one example of a parts catalog search screen image.
FIG. 5 shows one example of a parts catalog screen image including a display region for component parts groups.
FIG. 6 shows one example of the parts catalog screen image including a parts selection region.
FIG. 7 is a flowchart showing the flow of an update determination process.
FIG. 8 shows one example of a display screen image for purchase-unavailable information.
FIG. 9 shows one example of the display screen image for replacement parts information.
FIG. 10 is a flowchart showing the flow of a purchase procedure process.
FIG. 11 shows one example of a maintenance shop selection screen image.

### DETAILED DESCRIPTION

Hereinafter, an embodiment will be described with reference to the drawings.

### Entire Configuration of System

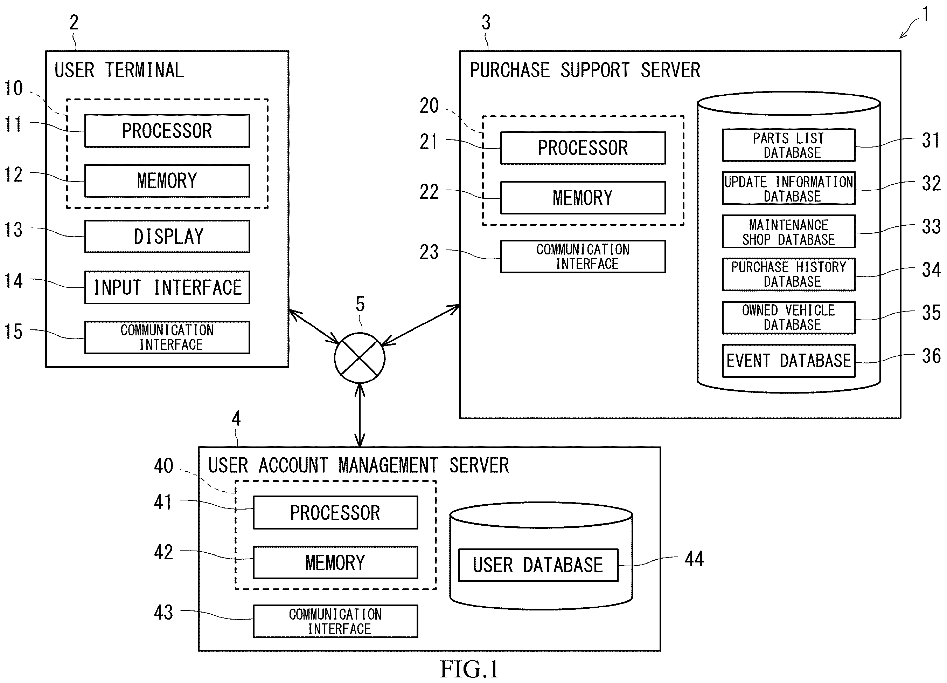

FIG. 1 is a block diagram showing a schematic configuration of a parts purchase support system 1 according to the embodiment. The parts purchase support system 1 is a system that supports users in purchasing parts of vehicles. The parts purchase support system 1 includes user terminals 2 and a purchase support server 3. For simplicity, FIG. 1 shows only one of the user terminals 2. In the present embodiment, the vehicles are, for example, motorcycles. The parts of the vehicles are consumable parts and replacement parts for motorcycles.

The user terminals 2 and the purchase support server 3 are connected to a communication network 5, such as the Internet. The communication network 5 is not limited to the Internet and may be another network, such as a LAN (Local Area Network), a WAN (Wide Area Network), a satellite communication line, or a mobile phone network.

The user terminal 2 is an information processing terminal operated by a user. The user may be, for example, a vehicle owner who owns the vehicle. For example, the user terminal 2 may be a personal computer, a smartphone, a tablet terminal, or the like.

As shown in FIG. 1, the user terminal 2 includes processing circuitry 10, a display 13, an input interface 14, and a communication interface 15. The processing circuitry 10 includes at least one processor 11 and at least one memory 12. The at least one processor 11 may include a CPU and the like. The at least one memory 12 may include a system memory, such as a RAM, and a storage memory, such as a hard disk, a flash memory, or a combination thereof.

The display 13 may be a liquid crystal display, a touch panel display, or the like.

The input interface 14 receives an operation from the user. The input interface 14 includes at least one of a touch panel, a keyboard, a mouse, a microphone, and the like.

The communication interface 15 includes a communication interface that is communicably connected to the communication network 5 through wired communication or wireless communication. In the case of the wired communication, the communication interface 15 may be a detachable terminal or communication connector. In the case of the wireless communication, the communication interface 15 may be a known wireless communicator.

The purchase support server 3 communicates with the user terminal 2 via the communication network 5. In accordance with information received from the user terminal 2, the purchase support server 3 executes a process to support purchase of a part requested by the user of the user terminal 2.

As shown in FIG. 1, the purchase support server 3 includes processing circuitry 20 and a communication interface 23. The processing circuitry 20 includes at least one processor 21 and at least one memory 22. The at least one processor 21 may include a CPU (Central processing unit) and the like. The at least one memory 22 may include a system memory, such as a RAM (Random Access Memory), and a storage memory, such as a hard disk, a flash memory, or a combination thereof.

The communication interface 23 includes a communication interface that is communicably connected to the communication network 5 through wired communication or wireless communication. In the case of the wired communication, the communication interface 23 may be a detachable terminal or communication connector. In the case of the wireless communication, the communication interface 23 may be a known wireless communicator.

The purchase support server 3 includes various databases. For example, the purchase support server 3 includes a parts list database 31, an update information database 32, a maintenance shop database 33, a parts purchase history database 34, an owned vehicle database 35, and an event database 36.

The parts list database 31 stores vehicle information in association with a parts image and parts information. The vehicle information is information regarding the vehicle. The parts image includes an image of a part constituting the vehicle. The parts information is information regarding the part shown in the parts image. The vehicle information is information for identifying the type of the vehicle. For example, the vehicle information includes information regarding the color of the vehicle, information regarding the model of the vehicle, information regarding the year of the vehicle, or a combination of at least two of these. The parts information regarding the part shown in the parts image may include a parts name, a parts number, the number of parts, a parts purchase price, or a combination of at least two of these. In addition, the parts information may include other information. For example, the parts information may include a parts color, a parts material, a parts weight, a parts size, parts handling precautions, and the like.

The update information database 32 stores update parts information in association with update information. The update parts information indicates an update-target part that is a part related to update from the parts list database 31. The update information is information regarding the update for the update-target part. The update-target part is any one of the parts in the parts list database 31.

In the present embodiment, the update-target part is a part that is unavailable for purchase in the parts list database 31. For example, the update information includes purchase-unavailable information indicating that the update-target part is unavailable for purchase. For example, the update information includes replacement parts information indicating a replacement part for the update-target part which has become available for purchase instead of the update-target part which has become unavailable for purchase. The update information may include the replacement parts information indicating the replacement part when the replacement part is available even though the update-target part is available for purchase. For example, the replacement parts may include non-genuine parts different from genuine parts or may include parts of different materials or colors, or parts of different grades.

The parts list database 31 and the update information database 32 are created based on information provided from a manufacturer of the vehicle or a seller of the vehicle. In other words, the parts list database 31 may be created based on information provided from a management organization for vehicles which, for example, manufactures, sells, and maintains vehicles. Similarly, the update information database 32 may be created based on information provided from the management organization.

The amount of information accumulated in the update information database 32 is smaller than that in the parts list database 31. The information stored in the parts list database 31 is information created by a vehicle manufacturing manager when the manufacturing of the vehicle is started. On the other hand, the information stored in the update information database 32 is information that is rewritten each time the information of the update-target part is updated. It is preferable that the update information database 32 be updated periodically based on information from the vehicle manufacturing manager or a vehicle sales manager. For example, the update information database 32 may be updated using information from a user account management server 4 each time a login is made from the user terminal 2.

The maintenance shop database 33 indicates maintenance shops at which the parts constituting the vehicles can be installed or replaced.

The parts purchase history database 34 indicates purchase history information indicating a parts purchase history for each user. The parts purchase history database 34 stores user information and the purchase history information in association with each other. The user information is information by which the user is identifiable. The purchase history information indicates the parts purchase history of the user.

The owned vehicle database 35 stores user identification information and information related to the vehicle owned by the user, in association with each other. The information related to the vehicle owned by the user may be a maintenance date of the vehicle owned by the user, a replacement timing of the part of the vehicle owned by the user, or the like.

The event database 36 stores the user identification information and event information related to an event corresponding to the attribute of the user, in association with each other. The event database 36 may be located separately from the purchase support server 3. In this case, the event database 36 may store the event information that is read from an external server and corresponds to the attribute of the user. The event information may be information that is considered to be useful for the user. The event information may be information regarding the purchase of an item or may be information not related to the purchase of the item. For example, the event information may be information that a new model of the series of the vehicle owned by the user will be released, announcements from an official fan club operated by a vehicle manufacturing and selling company, a license renewal timing, an insurance renewal timing, race information, or the like.

The purchase support server 3 is communicable with the user account management server 4 via the communication network 5.

For example, the user account management server 4 is the external server different from the purchase support server 3 that supports the users in purchasing the parts. The user account management server 4 may store information related to the user. As shown in FIG. 1, the user account management server 4 includes processing circuitry 40 and a communication interface 43. The processing circuitry 40 includes at least one processor 41 and at least one memory 42. The at least one processor 41 may include a CPU and the like. The at least one memory 42 may include a system memory, such as a RAM, and a storage memory, such as a hard disk, a flash memory, or a combination thereof.

The communication interface 43 includes a communication interface that is communicably connected to the communication network 5 through wired communication or wireless communication. In the case of the wired communication, the communication interface 43 may be a detachable terminal or communication connector. In the case of the wireless communication, the communication interface 43 may be a known wireless communicator.

The user account management server 4 includes a user database 44 that stores information related to the products and the users. The user account management server 4 may be a server that stores information held by the management organization for vehicles which, for example, manufactures, sells, and maintains vehicles. The user account management server 4 may be a server that stores information managed by an organization which manages the users, the products owned by the users, the groups to which the users belong, and the like, in association with each other. The user account management server 4 may include at least one of the databases, such as the event database, constituting the purchase support server 3.

### Purchasing Parts Selection Process

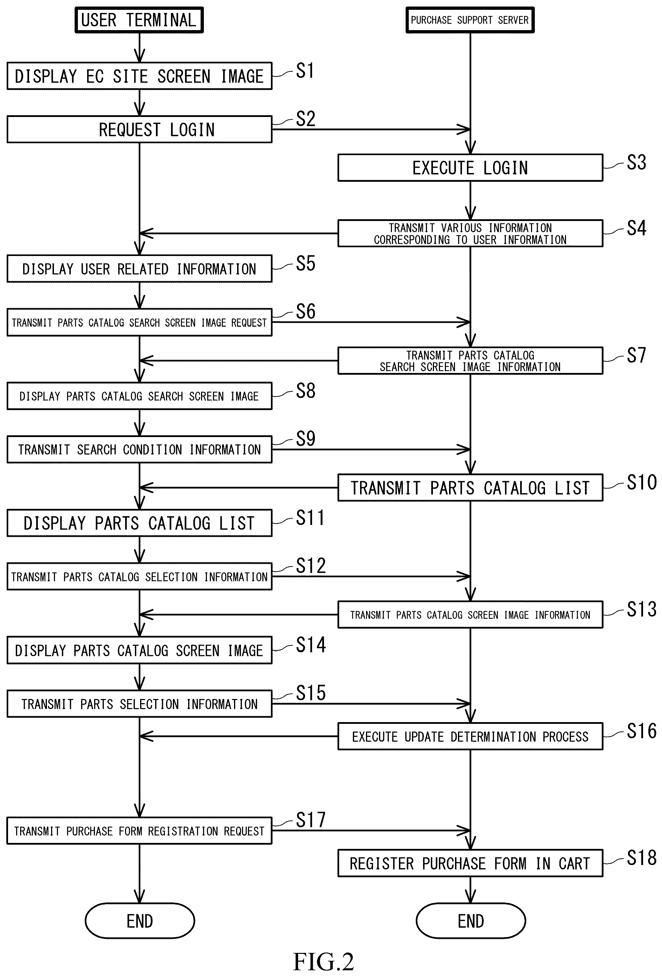

The parts purchase support system 1 executes a purchasing parts selection process that supports the user in selecting the vehicle parts that the user wants to purchase. FIG. 2 is a flowchart showing the flow of the purchasing parts selection process.

By the operation input from the user to the input interface 14, the processing circuitry 10 of the user terminal 2 causes the display 13 to display an EC (Electronic Commerce) site screen image (Step S1). For example, in Step S1, when the user accesses an EC site, operated by a company, from the user terminal 2 via the communication network 5, the EC site screen image that allows the user to purchase the vehicle parts is displayed on the display 13. Login information can be input to the EC site screen image.

The login information is information for logging in a user-dedicated page on the EC site. For example, the login information includes the user identification information (hereinafter also referred to as "user ID") and password information.

The login information is set by account registration performed in advance by the user. The account registration is performed in such a manner that the user inputs various types of user personal information through a predetermined registration screen image on the EC site. By this account registration, the login information necessary to log in the user-dedicated page on the EC site is given or registered, and various types of user information input by the user are registered.

The information registered by the account registration includes, for example, information for eliminating the need for the user to enter various types of user information each time the user uses the EC site. For example, the information registered by the account registration includes information that is necessary to purchase the part and was input in the past to purchase the part. Specifically, the information registered by the account registration includes the name of the user, the address of the user, the mail address of the user, and the like.

The information registered by the account registration may include information related to the vehicle. For example, the information related to the vehicle and registered by the account registration may include information regarding the licenses held by the user, vehicle identification information regarding the vehicle owned by the user, information regarding the maintenance shop used by the user, vehicle owner registration information, official fan club member registration information for a predetermined vehicle, member registration information for an application related to the vehicle, the type of information that the user wishes to be presented, a method of presenting the information that the user wishes to be presented, information indicating that the user wishes to restrict the use of the information registered by the account registration, or a combination of at least two of these. The vehicle identification information is, for example, a frame number. The vehicle owner registration information is a method of associating the vehicle with the vehicle owner when the user purchases the vehicle. For example, when it is determined that the user and the vehicle owner are different from each other in supporting the parts purchase, the user may be notified of this information, or this information may be stored in the server. Moreover, the vehicle owner registration information may include information indicating a vehicle owner history.

By the operation input from the user to the input interface 14, the processing circuitry 10 of the user terminal 2 transmits the login information to the purchase support server 3 (Step S2). For example, in Step S2, the user inputs a user ID and a password.

Upon receiving the login information, the processing circuitry 20 of the purchase support server 3 executes login authentication (Step S3). For example, in Step S3, it is determined whether or not the user ID and the password which have been input coincide with the user ID and the password set by the account registration.

The processing circuitry 20 of the purchase support server 3 transmits various information (hereinafter referred to as "user related information"), related to the user and indicated by the login information, to the user terminal 2 (Step S4). The processing circuitry 10 of the user terminal 2 causes the display 13 to display the user related information (Step S5). For example, in Step S5, the processing circuitry 10 causes the display 13 to display a user-dedicated screen image on the EC site, the user-dedicated screen image including the user related information.

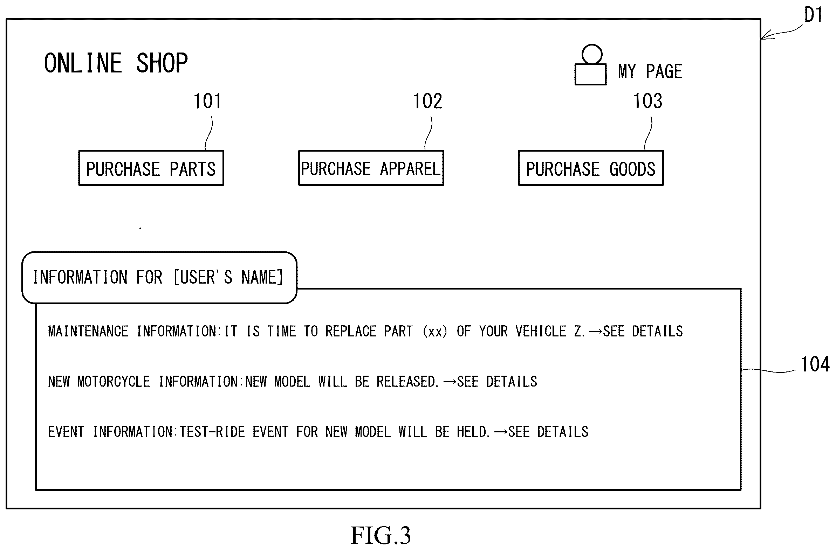

FIG. 3 shows one example of a user-dedicated screen image D1 on the EC site. The user-dedicated screen image D1 includes a parts purchase selection button 101, an apparel purchase selection button 102, and a goods purchase selection button 103. When the parts purchase selection button 101 is selected, the display screen image of the display 13 transitions to a screen image for purchasing parts. When the apparel purchase selection button 102 is selected, the display screen image of the display 13 transitions to a screen image for purchasing apparel. When the goods purchase selection button 103 is selected, the display screen image of the display 13 transitions to a screen image for purchasing goods. The apparel denotes apparel products worn by users. For example, the apparel denotes apparel items, such as outerwear, innerwear, raincoats, boots, gloves, protectors, goggles, and belts. The goods denotes items regarding vehicles other than the apparel. The goods may be vehicle accessories, such as key holders, bags, and cargo nets. Moreover, the goods may be items that the users wish to purchase, and may be items, such as stationery, toys, and towels with vehicle designs, other than the vehicle accessories.

Moreover, the user-dedicated screen image D1 includes a user related information display region 104 that displays the user related information. Information displayed in the user related information display region 104 is the information transmitted from the purchase support server 3 to the user terminal 2 in Step S4.

The user related information includes, for example, maintenance information that supports the maintenance of the vehicle owned by the user. Specifically, the processing circuitry 20 of the purchase support server 3 acquires the user identification information in Step S3, and then, in Step S4, refers to the owned vehicle database 35 and outputs the maintenance information, which supports the maintenance of the vehicle, to the user terminal 2. The processing circuitry 10 of the user terminal 2 causes the display 13 to output the received maintenance information. The maintenance information may be, for example, information that notifies the user of the replacement timing of the part of the vehicle owned by the user.

The user related information includes, for example, the event information related to the event corresponding to the attribute of the user. Specifically, the processing circuitry 20 of the purchase support server 3 acquires the user identification information in Step S3, and then, in Step S4, refers to the event database 36 and outputs the event information, which is indicated by the user identification information and corresponds to the user, to the user terminal 2. The processing circuitry 10 of the user terminal 2 causes the display 13 to output the received event information. The event information may be, for example, information that notifies the user of the release and test-ride event for the latest model of the vehicle owned by the user.

If the login information is not input by the user, Steps S2 to S5 described above are skipped. The user performs an operation for parts purchase from a normal screen image on the EC site, not from the user-dedicated screen image.

By the operation input from the user to the input interface 14, the processing circuitry 10 of the user terminal 2 transmits a parts catalog search screen image request to the purchase support server 3 (Step S6). For example, in Step S6, when the user operates the input interface 14 to select and execute the parts purchase selection button 101 on the EC site, the parts catalog search screen image request is transmitted from the purchase support server 3 to the user terminal 2. After that, the processing circuitry 20 of the purchase support server 3 transmits the parts catalog search screen image information to the user terminal 2 (Step S7). The processing circuitry 10 of the user terminal 2 causes the display 13 to display the parts catalog search screen image (Step S8).

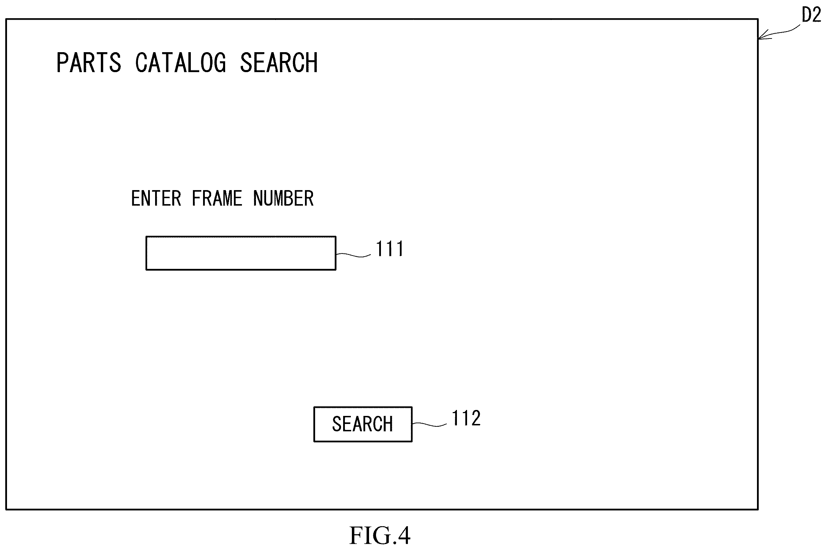

FIG. 4 shows one example of a parts catalog search screen image D2. The parts catalog search screen image D2 includes: a search window 111 for entering a search condition; and a search execution button 112. In the present embodiment, the search window 111 is a window for entering, as the search condition, a frame number that is one example of the vehicle identification information.

By the operation input from the user to the input interface 14, the processing circuitry 10 of the user terminal 2 transmits search condition information to the purchase support server 3 (Step S9). For example, in Step S9, the user inputs the frame number of the vehicle owned by the user to the search window 111, and then, selects and executes the search execution button 112, and as a result, the search condition information including the input frame number is transmitted from the user terminal 2 to the purchase support server 3.

After Step S9, the processing circuitry 20 of the purchase support server 3 acquires the frame number, refers to the parts list database 31, and outputs the parts image corresponding to the vehicle indicated by the frame number. In other words, the processing circuitry 20 transmits information of the parts catalog corresponding to the frame number to the user terminal 2.

Specifically, the processing circuitry 20 of the purchase support server 3 creates a parts catalog list, which is a collection of the parts catalogs satisfying the search condition, based on the received search condition information, and transmits the parts catalog list to the user terminal 2 (Step S10). The processing circuitry 10 of the user terminal 2 causes the display 13 to display the received parts catalog list (Step S11). In the present embodiment, the parts catalog list is a parts catalog list related to the frame number. To be specific, the parts catalog list corresponds to the model and the year of the vehicle owned by the user. The parts catalog list includes at least one parts catalog.

By the operation input from the user to the input interface 14, the processing circuitry 10 of the user terminal 2 transmits parts catalog selection information to the purchase support server 3 (Step S12). The processing circuitry 20 of the purchase support server 3 transmits parts catalog screen image information corresponding to the received parts catalog selection information to the user terminal 2 (Step S13). The processing circuitry 10 of the user terminal 2 causes the display 13 to display the parts catalog screen image based on the received parts catalog screen image information (Step S14). The user can select the parts that the user wants to purchase, from the parts of the parts catalog screen image displayed in Step S14.

After Step S14, by the operation input from the user to the input interface 14, the processing circuitry 10 of the user terminal 2 transmits parts selection information to the purchase support server 3 (Step S15). The parts selection information indicates the part (hereinafter referred to as a "selected part") selected by the user among the parts in the parts list database 31, that is, in the parts catalog screen image.

When the number of parts catalogs that satisfy the search condition is one in Step S10, the processing circuitry 20 may transmit the parts catalog screen image information of the parts catalog, which satisfies the search condition, to the user terminal 2 instead of executing Steps S11 to S13.

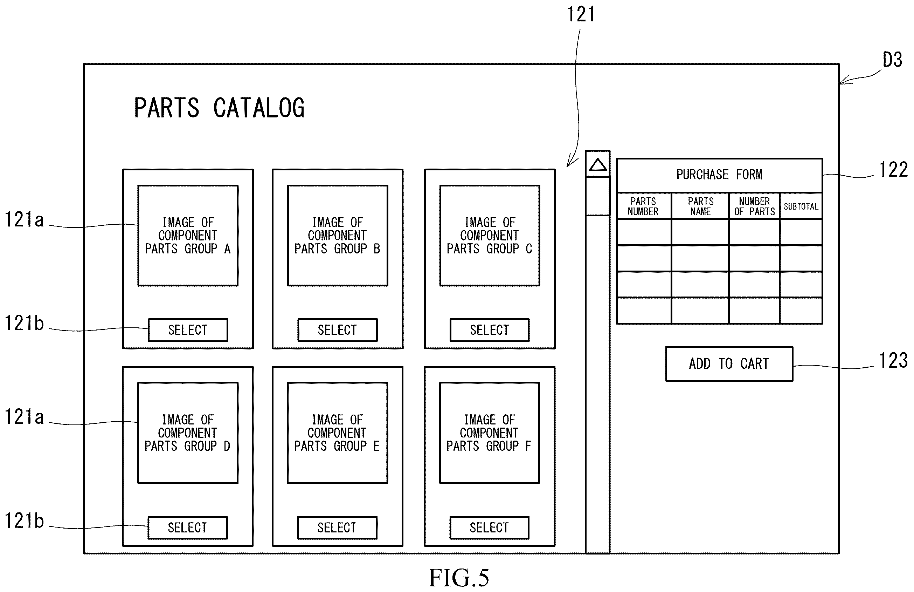

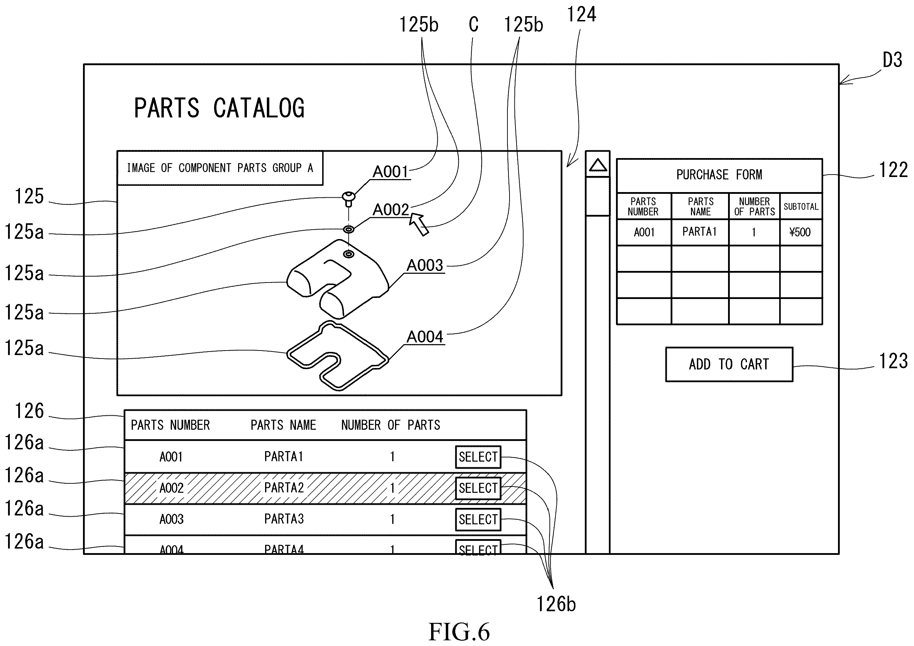

Displaying the parts catalog screen image in Step S14 and transmitting the parts selection information in Step S15 will be specifically described with reference to FIGS. 5 and 6.

FIG. 5 shows one example of a parts catalog screen image D3 including a display region 121 for the component parts groups. The parts catalog screen image D3 includes: the display region 121 for the component parts groups; a purchase form region 122; and a purchase form registration button 123.

The display region 121 for the component parts groups is a region that displays various component parts of vehicles. Each component parts group includes parts. Examples of the component parts groups include cylinder heads, air cleaners, mufflers, crankshafts, batteries, fuel tanks, taillights, and seats.

The display region 121 for the component parts groups includes: assembly images 121a that are images of the component parts groups; and select buttons 121b that accept the selection of the component parts group by the user. The user sees the assembly images 121a for the component parts groups and specifies the component parts group including the part that the user wants to purchase. When the user uses the input interface 14 to select and execute the select button 121b for the component parts group including the part that the user wants to purchase, the processing circuitry 10 of the user terminal 2 causes the display 13 to display a parts selection region 124.

FIG. 6 shows one example of the parts catalog screen image including the parts selection region 124. Instead of the display region 121 for the component parts groups, the processing circuitry 10 of the user terminal 2 causes the display 13 to display the parts selection region 124 that allows the user to select the parts included in the selected component parts group. To be specific, the display region 121 for the component parts groups is switched to the parts selection region 124.

The parts selection region 124 includes an image 125 of the component parts group and a parts list display region 126. The image 125 of the component parts group includes: images 125a of the respective parts included in the component parts group; and parts numbers 125b corresponding to the respective images 125a. The image 125 of the component parts group shows an exploded view of an assembly of the component parts. For example, in the image 125 of the component parts group, leader lines extend from the images 125a to the corresponding parts numbers 125b.

The parts list display region 126 shows a list of the parts constituting the component parts group. Specifically, the parts list display region 126 includes: parts display regions 126a corresponding to the respective parts constituting the component parts group; and select buttons 126b corresponding to the respective parts constituting the component parts group. Each parts display region 126a displays information of the corresponding part, such as the parts number, the parts name, and the number of parts.

In the present embodiment, the parts numbers 125b in the image 125 of the component parts group are selectable by the user through the input interface 14. When any one of the parts numbers 125b is selected, the processing circuitry 10 of the user terminal 2 highlights the parts display region 126a corresponding to the selected parts number 125b. For example, when the user uses the input interface 14 to move a cursor C on the screen image and click the parts number 125b in the image 125 of the component parts group, the parts display region 126a corresponding to the clicked parts number 125b is highlighted as shown in FIG. 6. Therefore, the user can easily find the parts display region 126a corresponding to the part in the image 125 of the component parts group.

When the user uses the input interface 14 to select and execute the select button 126b corresponding to the part that the user wants to purchase, the parts selection information indicating the part selected by the user is transmitted from the user terminal 2 to the purchase support server 3 in Step S15.

Referring back to FIG. 2, upon receiving the parts selection information, the processing circuitry 20 of the purchase support server 3 executes an update determination process (Step S16). In the update determination process, the processing circuitry 20 of the purchase support server 3 transmits information to the user terminal 2 as described below.

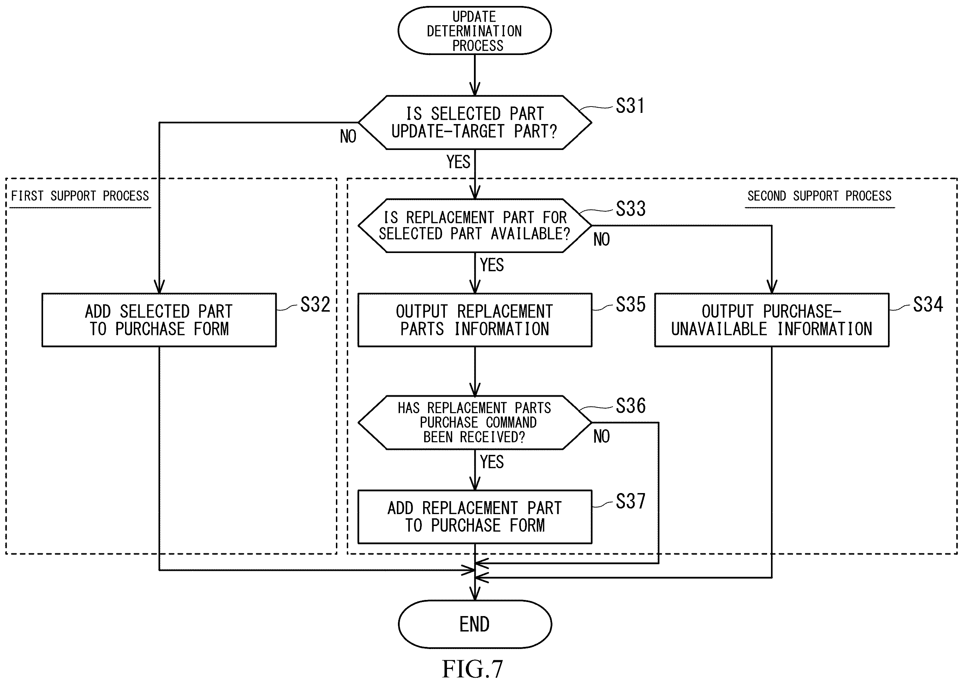

FIG. 7 is a flowchart showing the flow of the update determination process. In the update determination process, when the processing circuitry 20 of the purchase support server 3 refers to the update information database 32 and determines that the selected part is not the update-target part, the processing circuitry 20 executes a first support process that supports the user in purchasing the selected part. On the other hand, when the processing circuitry 20 of the purchase support server 3 refers to the update information database 32 and determines that the selected part is the update-target part, the processing circuitry 20 executes a second support process based on the update information instead of the first support process.

Specifically, in the update determination process, first, the processing circuitry 20 of the purchase support server 3 refers to the update information database 32 and determines whether or not the selected part is the update-target part (Step S31).

When the processing circuitry 20 determines that the selected part is not the update-target part (No in Step S31), the processing circuitry 20 executes the first support process (Step S32). In the present embodiment, the first support process is a process to add the selected part to a purchase form.

For example, when the selected part selected by the user is a part A1 with a parts number "A001" shown in FIG. 6, the processing circuitry 20 adds the part A1 with the parts number "A001" to the purchase form in the first support process. The processing circuitry 20 transmits information indicating that the part A1 with the parts number "A001" has been added to the purchase form, to the user terminal 2, and the processing circuitry 10 of the user terminal 2 displays the part A1 with the parts number "A001" in the purchase form region 122.

When the processing circuitry 20 determines that the selected part is the update-target part (Yes in Step S31), the processing circuitry 20 executes the second support process.

The second support process is a process different from the first support process. The second support process is a process to output the update information associated with the update-target part that is the selected part in the update information database 32. In the present embodiment, the update information is the purchase-unavailable information indicating that the update-target part is unavailable for purchase or the replacement parts information indicating the replacement part for the update-target part which has become available for purchase instead of the update-target part which has become unavailable for purchase. In the present embodiment, the second support process is a process to notify the user that the update-target part is unavailable for purchase or to suggest the replacement part for the update-target part to the user.

In the second support process of the present embodiment, first, the processing circuitry 20 determines based on the update information of the update information database 32 whether or not the replacement part for the selected part is available (Step S33).

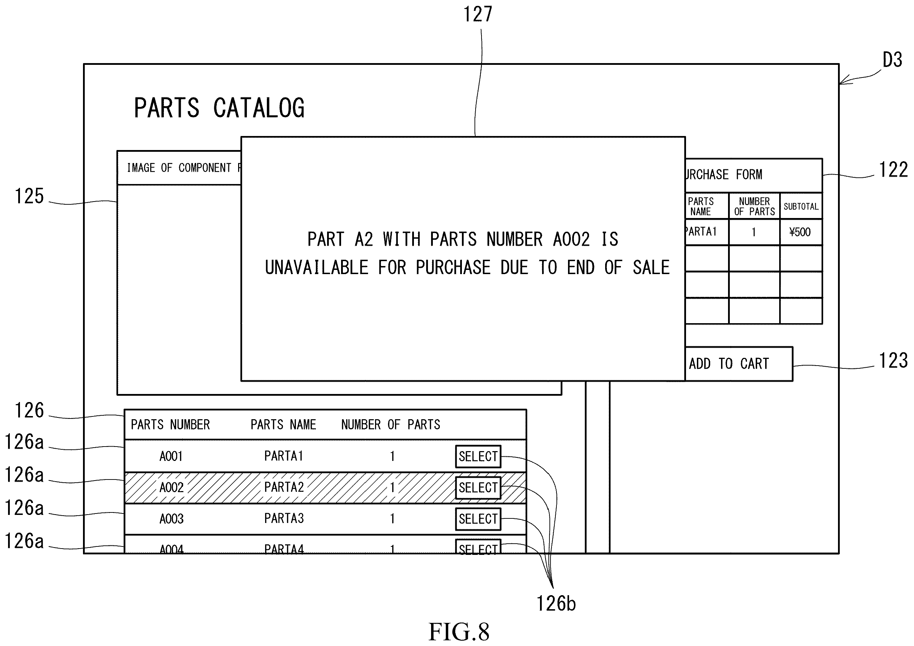

When the processing circuitry 20 determines that the replacement part for the selected part is not available (No in Step S33), the processing circuitry 20 outputs the purchase-unavailable information (Step S34). To be specific, the processing circuitry 20 transmits the purchase-unavailable information to the user terminal 2. Upon receiving the purchase-unavailable information, the processing circuitry 10 of the user terminal 2 causes the display 13 to display the purchase-unavailable information as shown in FIG. 8. For example, FIG. 8 shows an example in which a notification window 127 including a text message indicating that a part A2 with a parts number "A002" is unavailable for purchase is displayed as the purchase-unavailable information.

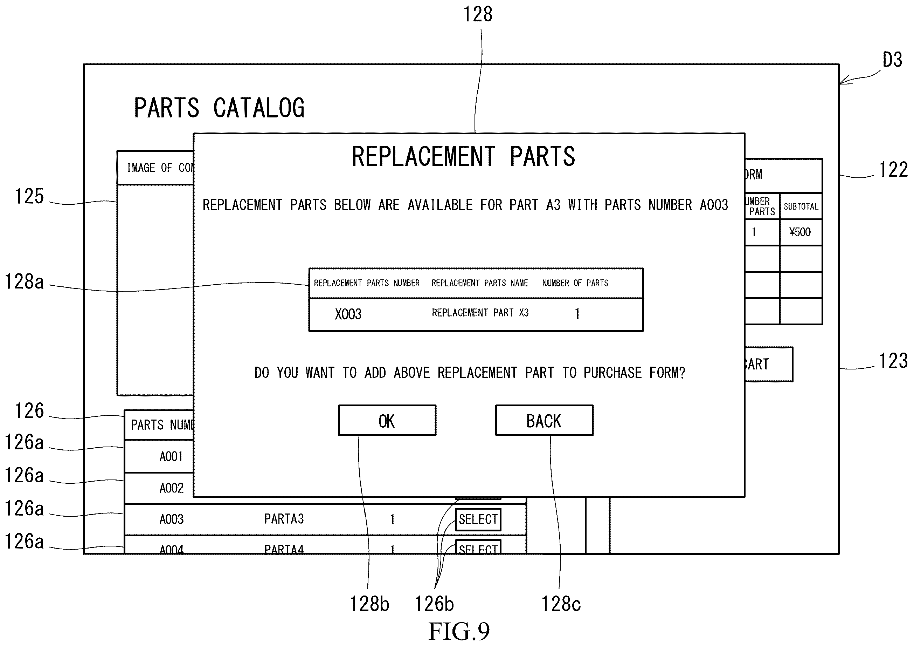

When the processing circuitry 20 determines in Step S33 that the replacement part for the selected part is available (Yes in Step S33), the processing circuitry 20 outputs the replacement parts information (Step S35). To be specific, the processing circuitry 20 transmits the replacement parts information to the user terminal 2. Upon receiving the replacement parts information, the processing circuitry 10 of the user terminal 2 causes the display 13 to display the replacement parts information as shown in FIG. 9.

For example, FIG. 9 shows an example in which a notification window 128 indicating the replacement part for a part A3 with a parts number "A003" is displayed as the replacement parts information. The notification window 128 includes a replacement parts display region 128a, an OK button 128b, and a back button 128c. The replacement parts display region 128a displays information of the replacement part, such as the parts number and the parts name of the replacement part, and the number of replacement parts. When the user does not agree to the purchase of the replacement part, the user can press the back button 128c. When the OK button 128b is executed by the operation input from the user to the input interface, the processing circuitry 10 of the user terminal 2 transmits a replacement parts purchase command to the purchase support server 3.

Referring back to FIG. 7, upon receiving the replacement parts purchase command (Yes in Step S36), the processing circuitry 20 executes a process to add the replacement part to the purchase form (Step S37). In this case, the processing circuitry 20 transmits information indicating that the replacement part is added to the purchase form, to the user terminal 2, and the processing circuitry 10 of the user terminal 2 displays the replacement part in the purchase form region 122.

Steps S15 and S16 in FIG. 2 are executed each time the user selects the part. The part is added to the purchase form in accordance with the result of the update determination process.

When all the parts that the user wants to purchase are added to the purchase form, and the user then uses the input interface 14 to select and execute the purchase form registration button 123, the processing circuitry 10 of the user terminal 2 transmits a purchase form registration request to the purchase support server 3 (Step S17). Upon receiving the purchase form registration request, the processing circuitry 20 of the purchase support server 3 adds the purchase form to a cart (EC cart) (Step S18).

The other items, such as the apparel and the goods, which have been selected by the user on the EC site are added and registered to the cart. After the user registers the items that the user wants to purchase, to the cart, the user performs an operation to proceed to a payment screen image.

The processing circuitry 20 of the purchase support server 3 may refer to the parts purchase history database 34 and notify the user of information regarding the parts which have been purchased together with the selected part indicated by the parts selection information.

When referring to the parts purchase history database 34, the processing circuitry 20 may refer to the purchase history of the user who is about to purchase the parts or may refer to the purchase history of another user. For example, the processing circuitry 20 may present the part that has been purchased by the user together with the selected part in the past. Thus, the user can recognize the part purchased together with the selected part in the past, and this can prevent the user from forgetting to purchase the part. For example, the processing circuitry 20 may present the part that another user, who has purchased the same part as the selected part selected by the user, has purchased together with the selected part. Thus, the user can recognize the part that is considered preferable to purchase together with the selected part.

When referring to the purchase history of another user in the parts purchase history database 34, the processing circuitry 20 may refer to the purchase history of another user who owns a vehicle of the same model as the vehicle owned by the user. This is because among the users who own the vehicle of the same model, the parts that they intend to purchase tend to be similar. To be specific, the processing circuitry 20 may present the part that another user, who has purchased the same part as the selected part selected by the user and owns the vehicle of the same model as the vehicle owned by the user, has purchased together with the selected part.

### Purchase Procedure Process

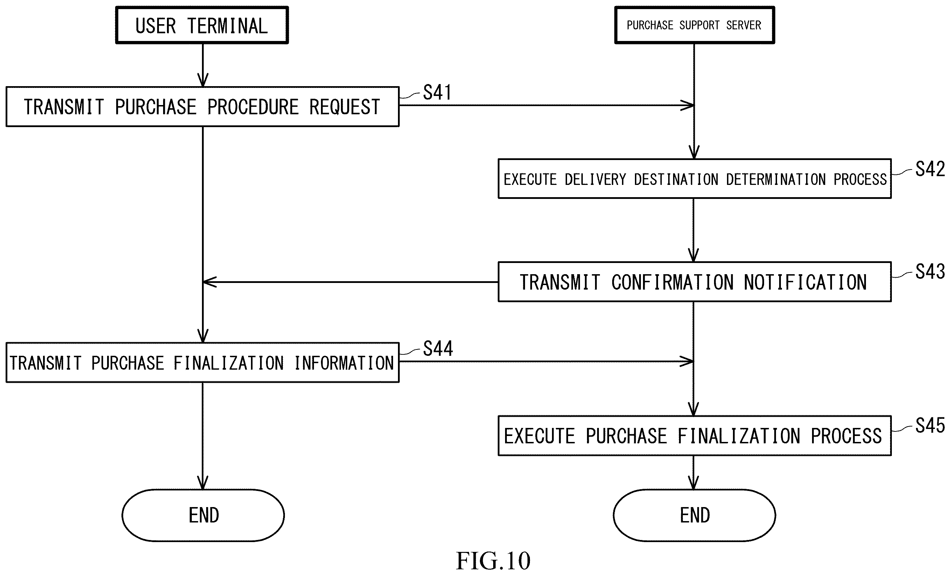

FIG. 10 is a flowchart showing the flow of the purchase procedure process. By the operation input from the user to the input interface 14, the processing circuitry 10 of the user terminal 2 transmits a purchase procedure request (Step S41). Upon receiving the purchase procedure request, the processing circuitry 20 of the purchase support server 3 executes a delivery destination determination process (Step S42). In the delivery destination determination process in the present embodiment, a maintenance shop which is selected by or related to the user among the maintenance shops indicated by the maintenance shop database 33 can be selected as the delivery destination for the part purchased by the user.

Specifically, in the delivery destination determination process, the processing circuitry 20 determines whether or not the purchase form for the parts is in the cart. When it is determined that the purchase form for the parts is in the cart, the processing circuitry 20 transmits the maintenance shop information indicating at least one maintenance shop in the maintenance shop database 33, to the user terminal 2.

The maintenance shop information may be information regarding the maintenance shop related to the user. For example, when the user has registered the nearest maintenance shop in the account registration in advance, the maintenance shop information may be information regarding the maintenance shop registered in the account registration. Or, the maintenance shop information may be, for example, information indicating the maintenance shop located within a predetermined range from the address of the user. Or, the maintenance shop information may be, for example, information indicating the maintenance shop at which the user has received service in the past. The maintenance shop information does not have to be the information regarding the maintenance shop related to the user and may be, for example, information regarding all the maintenance shops.

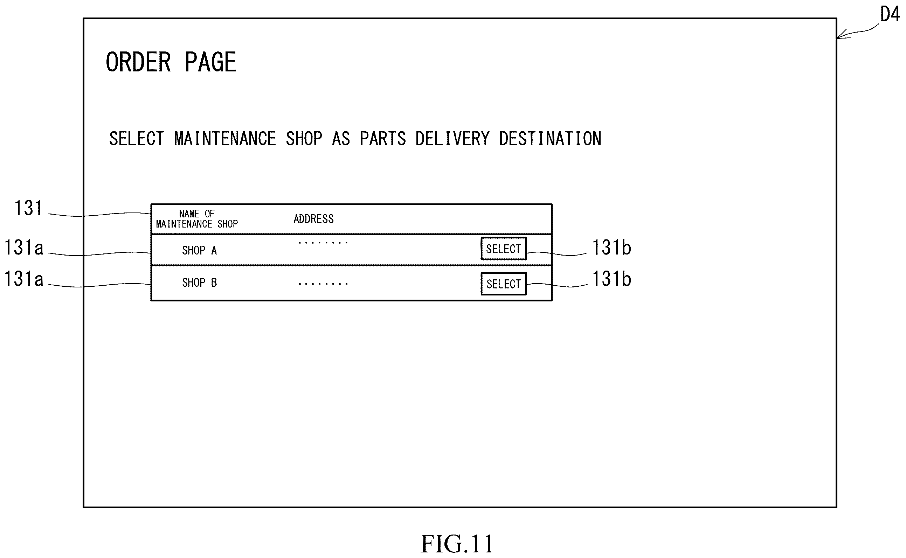

Upon receiving the maintenance shop information, the processing circuitry 10 of the user terminal 2 causes the display 13 to display, for example, a maintenance shop selection screen image D4 shown in FIG. 11. The maintenance shop selection screen image D4 includes a maintenance shop list display region 131. The maintenance shop list display region 131 includes: maintenance shop display regions 131a that display the name of the maintenance shop and the like; and select buttons 131b corresponding to the respective maintenance shop display regions 131a. When the user uses the input interface 14 to select and execute the select button 131b corresponding to the maintenance shop that the user wants to select as the delivery destination, maintenance shop designation information indicating the maintenance shop selected by the user is transmitted from the user terminal 2 to the purchase support server 3, and the maintenance shop at which the parts can be installed or replaced is determined as the delivery destination.

When the processing circuitry 20 determines in the delivery destination determination process that the purchase form for the parts is not in the cart, the processing circuitry 20 sets the address of the user, which has already been registered in the account registration, as the delivery destination. When the processing circuitry 20 determines that the purchase form for the parts is in the cart, the processing circuitry 20 may determine the delivery destination for purchased products except for the parts, as the address of the user which has already been registered in the account registration, or may determine the delivery destination for purchased products except for the parts, as the maintenance shop that is the delivery destination for the parts.

After the processing circuitry 20 determines the delivery destination, the processing circuitry 20 transmits, to the user terminal 2, confirmation notification for confirming whether to finalize the purchase (Step S43). After that, when the user performs an operation to finalize the purchase, the processing circuitry 10 transmits purchase finalization information to the purchase support server 3 (Step S44), and the processing circuitry 20 of the purchase support server 3 finalizes the purchase procedure (Step S45).

### Effects

As described above, according to the present embodiment, the parts purchase support system 1 includes the update information database 32 separately from the parts list database 31. The processing circuitry 20 refers to the update information database 32 and executes the support operation. Thus, it is possible to realize the purchase support operation by the system which reflects updates to the parts information in accordance with changes in circumstances. Moreover, according to the present embodiment, by updating the update information database 32, the updates of the parts list database 31 become unnecessary. Moreover, even if the parts list prepared for each product type in accordance with the model or the year becomes enormous, the maintenance management work of the system can be reduced.

### Other Embodiments

The foregoing has described the embodiment, but modifications, deletions, and additions may be made with respect to the above configuration within the scope of the present invention.

In the above embodiment, the purchase support server 3 includes the parts list database, the update information database, and the processing circuitry configured to acquire the parts selection information indicating the selected part selected by the user from the parts in the parts list database. However, the user terminal 2 may include the parts list database, the update information database, and the processing circuitry.

In the above embodiment, the parts purchase support system does not have to include the update information database.

The transition of the screen image from the EC site and the displaying of the screen images described in the above embodiment are merely examples.

In the above embodiment, when the processing circuitry 20 of the purchase support server 3 determines that the selected part is the update-target part, the processing circuitry 20 executes the second support process based on the update information instead of the first support process. However, when the processing circuitry 20 of the purchase support server 3 determines that the selected part is the update-target part, the processing circuitry 20 may execute the second support process based on the update information in addition to the first support process. More specifically, in the above embodiment, the second support process is a process executed when the selected part selected by the user is unavailable for purchase. However, the second support process may be a process executed when the selected part selected by the user is available for purchase.

For example, the update information may be information regarding precautions when the selected part is purchased. In this case, when the processing circuitry 20 of the purchase support server 3 determines that the selected part is the update-target part, the processing circuitry 20 may execute, as the second support process, the process to notify the user of the precautions as the update information, in addition to the execution of the first support process that is the process to add the selected part to the purchase form. The information regarding the precautions may include: information that the user needs to be aware of when replacing the old part of the vehicle with the update-target part; or information regarding below-described supply.

For example, the update information is information that is not in the parts list database 31 and should be presented to the user who wants to purchase the update-target part. For example, the update information may include information that the user needs to be aware of when replacing the old part of the vehicle with the update-target part. For example, the update information may include the information regarding the supply. The information regarding the supply may include information regarding the end of sale, information regarding a manufacturing plan, and information regarding a delivery date.

For example, the replacement parts information does not have to be the information indicating the replacement part for the update-target part which has become available for purchase instead of the update-target part which has become unavailable for purchase. More specifically, the replacement part does not have to be a part which has become available for purchase instead of the update-target part which has become unavailable for purchase, and both the update-target part and the replacement part may be selectable for purchase. The replacement parts information may be merely information indicating the replacement part for the update-target part.

The maintenance shop database 33, the parts purchase history database 34, the owned vehicle database 35, and the event database 36 do not have to be databases that are independent from each other. For example, instead of individually including two or more of the maintenance shop database 33, the parts purchase history database 34, the owned vehicle database 35, and the event database 36, the purchase support server 3 may include a single database created by integrating two or more of them.

Moreover, the database included in the purchase support server 3 may be a database received from the user account management server 4. Or, the database included in the purchase support server 3 may be a database created based on information received from the user database 44. The user database 44 included in the user account management server 4 may be a database for information unrelated to the parts purchase history of the user. The user database 44 may be, for example, a database that stores the user information and the vehicle related information related to the vehicle owned by the user, in association with each other. The user information may be the name of the user, the address of the user, the mail address, the user identification information, and the like. The vehicle related information may be the vehicle owner registration information, the official fan club member registration information for a predetermined vehicle, the member registration information for the application related to the vehicle, and the like.

The processing circuitry 20 of the purchase support server 3 receives the user database 44 from the user account management server 4. The processing circuitry 20 of the purchase support server 3 may store the purchase history information and the vehicle related information, which are associated with the same user information, in association with each other. In other words, the processing circuitry 20 of the purchase support server 3 may integrate the parts purchase history database 34 and the user database 44 as a single database that stores the user information, the purchase history information, and the vehicle related information in association with each other.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The purchase support server 3 is one example and may include at least one of the above-described components. For example, the maintenance shop database 33 and the event database 36 are located in the external server. The purchase support server 3 may be functionally configured. The purchase support server 3 may be realized in such a manner that servers are electronically connected to each other so as to be capable of data communication.

In the present embodiment, the vehicle is the motorcycle. In the case of the motorcycle, it is assumed that the user will replace the consumable parts and the replacement parts by himself/herself. Therefore, the above parts purchase support system 1 can suitably support the parts purchase. In the present embodiment, the vehicle may be a vehicle other than the motorcycle.

As described above, it is desirable that an information update frequency of the update information database 32 be higher than that of the parts list database 31. Moreover, each time the login is made from the user terminal 2, the purchase support server 3 may acquire the latest update information and update the update information database 32. However, each time the user selects the part, the purchase support server 3 may access the external server to acquire the latest update information. It is preferable that when the latest update information database is stored in the external server, the update information database be updated by information from the management organization that manufactures or sells vehicles.

In the present embodiment, the update-target part is a part that is unavailable for purchase. However, the update-target part may be a part that is available for purchase. For example, the update-target parts is set when a parts provision form is changed from that of an initial parts provision stage. Specifically, examples of the change in the parts provision form include: a case where the part that was not made-to-order at the initial parts provision stage is now made-to-order; a case where the parts delivery date is delayed; a case where the material, the shape, the surface treatment, and the like of the part have been changed; and a case where precautions have arisen regarding the handling of the part, the removal of the part from the vehicle, and the like. When a new comment is necessary for such target part, the comment may be added to the notification window 127. Moreover, steps of: after adding the comment to the selected part, confirming whether or not the user intends to purchase the part; and when it is confirmed that the user intends to purchase the part, selecting the part for purchase may be added.

### Disclosed Aspects

The following aspects disclose preferred embodiments.

### First Aspect

A parts purchase support system that supports a user in purchasing a part of a vehicle,
the parts purchase support system including:
a parts list database that stores vehicle information in association with a parts image and parts information, the vehicle information being information regarding the vehicle, the parts image including an image of the part constituting the vehicle, the parts information being information regarding the part shown in the parts image;
an update information database that stores update parts information in association with update information, the update parts information indicating an update-target part that is the part related to update from the parts list database, the update information being information regarding the update for the update-target part; and
processing circuitry configured to
acquire parts selection information indicating a selected part selected by the user from parts in the parts list database,
when the processing circuitry refers to the update information database and determines that the selected part is not the update-target part, execute a first support process that supports the user in purchasing the selected part, and
when the processing circuitry refers to the update information database and determines that the selected part is the update-target part, execute a second support process based on the update information in addition to or instead of the first support process.

According to the first aspect, the parts purchase support system includes the update information database separately from the parts list database. The processing circuitry refers to the update information database and executes the support operation. Thus, it is possible to realize the purchase support operation by the system which reflects updates to the parts information in accordance with changes in circumstances. Moreover, according to the first aspect, by updating the update information database, the updates of the parts list database become unnecessary. Moreover, even if the parts list prepared for each product type in accordance with the model or the year become enormous, the maintenance management work of the system can be reduced.

### Second Aspect

The parts purchase support system according to the first aspect, wherein:
the update information includes purchase-unavailable information indicating that the update-target part is unavailable for purchase; and
the second support process includes a process that notifies the user that the update-target part is unavailable for purchase.

According to the second aspect, the user can recognize that the part selected by the user is unavailable for purchase. Thus, when the part selected by the user is unavailable for purchase, the user can take a measure more quickly than a case where the user is notified that the part selected by the user is unavailable for purchase, after the order is placed.

### Third Aspect

The parts purchase support system according to the first or second aspect, wherein:
the update information includes replacement parts information indicating a replacement part for the update-target part; and
the second support process includes a process that notifies the user that the replacement part for the update-target part is available.

According to the third aspect, the purchase of the replacement part for the part selected by the user can be supported, and this can improve the convenience.

### Fourth Aspect

The parts purchase support system according to any one of the first to third aspects, wherein the second support process includes a process to output the update information associated with the update-target part that is the selected part.

According to the fourth aspect, by outputting the update information, the user can recognize that the selected part is the part related to the update, and it is possible to prevent the user from proceeding with the purchase of the part without knowing that the part is a part related to the update.

### Fifth Aspect

The parts purchase support system according to any one of the first to fourth aspects, wherein the processing circuitry acquires vehicle identification information given to the vehicle to identify the vehicle, refers to the parts list database, and outputs the parts image corresponding to the vehicle identified by the vehicle identification information.

According to the fifth aspect, the parts image corresponding to the vehicle identified by the vehicle identification information is output. Therefore, the user's effort to look up the model and the year of the vehicle can be reduced.

### Sixth Aspect

The parts purchase support system according to any one of the first to fifth aspects, further including a maintenance shop database indicating maintenance shops at which the parts are installed or replaced, wherein
the processing circuitry selects the maintenance shop, which is selected by or related to the user among the maintenance shops indicated by the maintenance shop database, as a delivery destination for the part purchased by the user.

According to the sixth aspect, since the maintenance shop can be selected as the delivery destination for the part, the convenience of the user can be improved.

### Seventh Aspect

The parts purchase support system according to any one of the first to sixth aspects, further including a parts purchase history database indicating purchase history information indicating a parts purchase history of the user, wherein
the processing circuitry refers to the parts purchase history database and notifies the user of information regarding the part which has been purchased together with the selected part indicated by the parts selection information.

According to the seventh aspect, the user can acquire the part which has been purchased together with the selected part. Thus, the user can recognize additional information necessary for the purchase of the part, and this can simplify parts purchase work.

### Eighth Aspect

The parts purchase support system according to any one of the first to seventh aspects, further including an owned vehicle database that stores user identification information and information related to the vehicle owned by the user, in association with each other, wherein
the processing circuitry acquires the user identification information, refers to the owned vehicle database, and outputs maintenance information that supports maintenance of the vehicle.

According to the eighth aspect, the maintenance information that supports the maintenance of the vehicle can be provided to the user.

### Ninth Aspect

The parts purchase support system according to any one of the first to eighth aspects, further including an event database that stores user identification information and event information related to an event corresponding to an attribute of the user, in association with each other, wherein
the processing circuitry acquires the user identification information, refers to the event database, and outputs the event information corresponding to the user indicated by the user identification information.

According to the ninth aspect, the event information related to the event corresponding to the attribute of the user can be provided to the user.

### Tenth Aspect

The parts purchase support system according to any one of the first to ninth aspects, wherein the parts list database and the update information database are created based on information from a manufacturer of the vehicle or a seller of the vehicle.

According to the tenth aspect, since the parts list database is created based on the information from the manufacturer of the vehicle or the seller of the vehicle, the parts list database suitable for supporting the user in purchasing the part is obtained.

### Eleventh Aspect

The parts purchase support system according to any one of the first to tenth aspects, wherein a purchase support server that communicates with a user terminal, operated by the user, via a network includes the parts list database, the update information database, and the processing circuitry.

According to the eleventh aspect, updating the update information database is easily performed.

### Twelfth Aspect

The parts purchase support system according to any one of the first to eleventh aspects, wherein:
the purchase support server further includes a parts purchase history database that stores user information and purchase history information in association with each other, the user information being information by which the user is identifiable, the purchase history information indicating a parts purchase history of the user;
the processing circuitry of the purchase support server receives the user information and vehicle related information from an external server different from the purchase support server, the vehicle related information being associated with the user information and related to the vehicle owned by the user; and
the processing circuitry of the purchase support server stores the purchase history information and the vehicle related information, which are associated with the same user information, in association with each other.

According to the twelfth aspect, based on the information obtained from the external server, the vehicle related information other than the purchase history information is associated with the user information and stored, and therefore, useful information related to the vehicle can be provided to the user who purchases the part.

### Thirteenth Aspect

A parts purchase support system that supports a user in purchasing a part of a vehicle,
the parts purchase support system including:
a parts list database that stores vehicle information in association with a parts image and parts information, the vehicle information being information regarding the vehicle, the parts image including an image of the part constituting the vehicle, the parts information being information regarding the part shown in the parts image; and
processing circuitry configured to acquire vehicle identification information given to the vehicle to identify the vehicle, refer to the parts list database, and output the parts image corresponding to the vehicle identified by the vehicle identification information.

### Fourteenth Aspect

A parts purchase support method of supporting a user in purchasing a part of a vehicle,
the parts purchase support method including:
acquiring parts selection information indicating a selected part selected by the user from parts of the vehicle;
referring to an update information database that stores update parts information in association with update information, the update parts information indicating an update-target part that is the part related to update among the parts of the vehicle, the update information being information regarding the update for the update-target part;
when it is determined that the selected part is not the update-target part, executing a first support process that supports the user in purchasing the selected part;
referring to the update information database; and
when it is determined that the selected part is the update-target part, executing a second support process based on the update information in addition to or instead of the first support process.

A parts purchase support program that causes at least one processor to execute the above method.

## Claims

1. A parts purchase support system that supports a user in purchasing a part of a vehicle,
the parts purchase support system comprising:
a parts list database that stores vehicle information in association with a parts image and parts information, the vehicle information being information regarding the vehicle, the parts image including an image of the part constituting the vehicle, the parts information being information regarding the part shown in the parts image;
an update information database that stores update parts information in association with update information, the update parts information indicating an update-target part that is the part related to update from the parts list database, the update information being information regarding the update for the update-target part; and
processing circuitry configured to
acquire parts selection information indicating a selected part selected by the user from parts in the parts list database,
when the processing circuitry refers to the update information database and determines that the selected part is not the update-target part, execute a first support process that supports the user in purchasing the selected part, and
when the processing circuitry refers to the update information database and determines that the selected part is the update-target part, execute a second support process based on the update information in addition to or instead of the first support process.

2. The parts purchase support system according to claim 1, wherein:
the update information includes purchase-unavailable information indicating that the update-target part is unavailable for purchase; and
the second support process includes a process that notifies the user that the update-target part is unavailable for purchase.

3. The parts purchase support system according to claim 1 or 2, wherein:
the update information includes replacement parts information indicating a replacement part for the update-target part; and
the second support process includes a process that notifies the user that the replacement part for the update-target part is available.

4. The parts purchase support system according to any one of claims 1 to 3, wherein the second support process includes a process to output the update information associated with the update-target part that is the selected part.

5. The parts purchase support system according to any one of claims 1 to 4, wherein the processing circuitry acquires vehicle identification information given to the vehicle to identify the vehicle, refers to the parts list database, and outputs the parts image corresponding to the vehicle identified by the vehicle identification information.

6. The parts purchase support system according to any one of claims 1 to 5, further comprising a maintenance shop database indicating maintenance shops at which the parts are installed or replaced, wherein
the processing circuitry selects the maintenance shop, which is selected by or related to the user among the maintenance shops indicated by the maintenance shop database, as a delivery destination for the part purchased by the user.

7. The parts purchase support system according to any one of claims 1 to 6, further comprising a parts purchase history database indicating purchase history information indicating a parts purchase history of the user, wherein
the processing circuitry refers to the parts purchase history database and notifies the user of information regarding the part which has been purchased together with the selected part indicated by the parts selection information.

8. The parts purchase support system according to any one of claims 1 to 7, further comprising an owned vehicle database that stores user identification information and information related to the vehicle owned by the user, in association with each other, wherein
the processing circuitry acquires the user identification information, refers to the owned vehicle database, and outputs maintenance information that supports maintenance of the vehicle.

9. The parts purchase support system according to any one of claims 1 to 8, further comprising an event database that stores user identification information and event information related to an event corresponding to an attribute of the user, in association with each other, wherein
the processing circuitry acquires the user identification information, refers to the event database, and outputs the event information corresponding to the user indicated by the user identification information.

10. The parts purchase support system according to any one of claims 1 to 9, wherein the parts list database and the update information database are created based on information from a manufacturer of the vehicle or a seller of the vehicle.

11. The parts purchase support system according to any one of claims 1 to 10, wherein a purchase support server that communicates with a user terminal, operated by the user, via a network includes the parts list database, the update information database, and the processing circuitry.

12. The parts purchase support system according to any one of claims 1 to 11, wherein:
the purchase support server further includes a parts purchase history database that stores user information and purchase history information in association with each other, the user information being information by which the user is identifiable, the purchase history information indicating a parts purchase history of the user;
the processing circuitry of the purchase support server receives the user information and vehicle related information from an external server different from the purchase support server, the vehicle related information being associated with the user information and related to the vehicle owned by the user; and
the processing circuitry of the purchase support server stores the purchase history information and the vehicle related information, which are associated with the same user information, in association with each other.

13. A parts purchase support system that supports a user in purchasing a part of a vehicle,
the parts purchase support system comprising:
a parts list database that stores vehicle information in association with a parts image and parts information, the vehicle information being information regarding the vehicle, the parts image including an image of the part constituting the vehicle, the parts information being information regarding the part shown in the parts image; and
processing circuitry configured to acquire vehicle identification information given to the vehicle to identify the vehicle, refer to the parts list database, and output the parts image corresponding to the vehicle identified by the vehicle identification information.

14. A parts purchase support method of supporting a user in purchasing a part of a vehicle,
the parts purchase support method comprising:
acquiring parts selection information indicating a selected part selected by the user from parts of the vehicle;
referring to an update information database that stores update parts information in association with update information, the update parts information indicating an update-target part that is the part related to update among the parts of the vehicle, the update information being information regarding the update for the update-target part;
when it is determined that the selected part is not the update-target part, executing a first support process that supports the user in purchasing the selected part;
referring to the update information database; and
when it is determined that the selected part is the update-target part, executing a second support process based on the update information in addition to or instead of the first support process.
